(19) **Europäisches Patentamt**
**European Patent Office**
**Office européen des brevets**

(11) **EP 3 330 310 A1**

(12) **EUROPEAN PATENT APPLICATION**

(43) Date of publication:
**06.06.2018 Bulletin 2018/23**

(51) Int Cl.:
***C08J 3/075*** (2006.01)  ***C08K 5/00*** (2006.01)
***C08K 3/32*** (2006.01)

(21) Application number: **16201806.3**

(22) Date of filing: **01.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Technische Universität Dortmund 44227 Dortmund (DE)**

(72) Inventors:
 • TILLER, Jörg C.
  **58313 Herdecke (DE)**
 • RAUNER, Nicolas
  **42369 Wuppertal (DE)**
 • ZORIC, Mirjana
  **45899 Gelsenkirchen (DE)**

(74) Representative: **Michalski Hüttermann & Partner Patentanwälte mbB Speditionstraße 21 40221 Düsseldorf (DE)**

(54) **HYDROGEL COMPOSITE MATERIAL**

(57) The present invention concerns a hydrogel composite material made out of a crosslinked (meth)acrylate and an inorganic salt such as calcium phosphate or calcium carbonate which forms percolated nanostructures therein. This hydrogel composite material can be made by embedding a catalyst in the polymer and then forming the salt from a phosphate or carbonate ester.

**EP 3 330 310 A1**

## Description

The present invention relates to the field of hydrogel composite materials.

Hydrogel materials are widely used in many fields of technology. Of particular interest are hydrogels which employ a certain stiffness or toughness due to their potential in many applications. However, hydrogel materials as such are rather soft materials as such, therefore it has been investigated whether hydrogel composite materials may be suitable candidates, especially hydrogel materials which contain a filler, such as an inorganic material.

However, there is still a constant need for hydrogel composite materials which have a certain tough- or stiffness, especially with a Young's modulus of 10 MPa or more in hydrated form and it is an object to provide such materials and methods of their production.

This object is solved by a hydrogel composite material according to Claim 1 of the present invention. Accordingly, a hydrogel composite material is provided comprising a crosslinked hydrogel material and an inorganic material, whereby the inorganic material forms percolated nanostructures within the hydrogel material

Surprisingly it has been found that by doing so the stiffness of the hydrogel composite material can be increased for many applications within the present invention.

For many applications within the present invention, one or more of the following advantages can be found

- The hydrogel composite material is biocompatible and can be used for medicinal purposes, such as (but not excluding) stiff scaffolds in tissue engineering for regenerative medicine and cell growth, tough implants or carriers for drug delivery.
- The hydrogel composite material can be made using a simple and effective manufacturing procedure, as will be described later on.
- The hydrogel composite material can be used as membranes for processes that need high pressure, e.g. for water processing, nano filtration and water desalination.
- The hydrogel composite material is suited as fuel cells or battery separators and further can be used as material for electrodes.

According to a preferred embodiment of the present invention, the ratio (vol/vol) of the inorganic material to the hydrogel material is from $\geq 3$ to $\leq 20$ vol%. This has proven itself effective for many applications within the present invention. More preferred the ratio (vol/vol) of the inorganic material to the hydrogel material is from $\geq 5$ to $\leq 16$ vol%.

The hydrogel and the inorganic material will be described in more detail, whereby all preferable features of all materials can be combined ad libitum:

Hydrogel material:

The term "hydrogel material" in the sense of the present invention especially means and/or includes a hydrophilic polymer material. Hydrogels are highly absorbent (they can contain over 50 vol% water) natural or synthetic polymeric networks.

According to a preferred embodiment of the present invention, the hydrogel material comprises a superabsorbent material. The term "superarbsorbent" especially means and/or includes polymers which are capable of absorbing aqueous solutions. According to a preferred embodiment of the present invention, the hydrogel material consists mainly out of a superabsorbent material.

The term "consisting mainly" in the sense of the present invention especially means and/or includes a ratio (wt%) of $\geq 50\%$, preferably $\geq 70\%$, yet preferably $\geq 80\%$ and most preferred $\geq 95\%$

The hydrogel material is cross-linked. The term "cross-linked" in the sense of the present invention especially means and/or includes that the hydrogel material is made by polymerization using a molecule with subunits that react with at least two functional groups contained in the used monomers, (further whenever suitable to be called "crosslinking molecule" in contrast to "non-crosslinking monomers").

According to a preferred embodiment of the present invention the ratio of the crosslinking molecule is [wt%/wt% of the total monomers and crosslinking molecules] $\geq 0,01\%$ and $\leq 3\%$, preferably $\geq 0,05\%$ and $\leq 1,0\%$. This has proven itself in practice for many applications within the present invention.

According to a preferred embodiment of the present invention, the hydrogel material comprises a polymer selected from (meth)acrylic polymers, polyurethanes, polyvinyl alcohols, polyvinylpyrrolidones, polyepoxides, polyoxazolines, polysaccharides, proteins, polyvinylethers, polyphosphazenes, polyesters or mixtures thereof.

Preferred polyepoxides comprise crosslinked polyethylenglycoles and polypropylenglycoles.

Preferred polyoxazolines comprise crosslinked poly (2-ethyl-2-oxazoline), poly (2-methyl-2-oxazolines) and poly (2-isopropyl-2-oxazolines).

Preferred polysaccharides comprise dextrane, chitin, chitosan, pectin, carboxymethylcurdlan and pullulan, carboxymethylcellulose, hydroxyethylcellulose, hydroxypropylmethylcellulose, methylcellulose, xanthan, hyaluronic acid, alginates, carageenes, starch and heparin.

Preferred proteins comprise gelatin, polylysine, polyalbumin and pectine.

According to a preferred embodiment of the present invention, the hydrogel material consists mainly out of a cross-linked (meth)acrylic polymer.

The term "(meth)acrylic polymer" especially means and/or includes polymers which are made from polymerizing monomers which comprise, preferably consists mainly out of (meth)acrylic acid moieties and/or their derivatives.

Preferably the (meth)acrylic polymer is made by polymerization using at least one cross-linking monomer and at least one non-crosslinking monomer.

Preferred non-crosslinking monomers are selected out of the group comprising (meth)acrylic acid, (meth)acrylic acid esters, especially methyl(meth)acrylate, ethyl(meth)acrylate, 2-hydroxyethyl(meth)acrylate, (meth)acrylamides, N-alkyl(meth)acrylamides, N,N'-dialkyl(meth)acrylamides, ammonium alkyl (meth)acrylates, ammonium alkyl (meth)acrylamides, (meth)acrylic ester phosphates, (meth)acrylic ester phosphonates, (meth)acrylic ester sulfates, (meth)acrylic ester sulfonates] or mixtures thereof. Especially preferred are 2-hydroxyethyl acrylate (HEA), Acrylamide, N,N'-Dimethylacrylamid (DMA) and ethyl 2-[4-(dihydroxyphosphoryl)-2-oxabutyl]acrylic acid (EDPOA).

Preferred crosslinking monomers are selected out of the group comprising N,N'-methylenebis((meth)acrylmide), triethylene glycol dimeth(meth)acrylate, glycerol 1,3-di(meth)acrylate or mixtures thereof.

According to a preferred embodiment of the present invention the ratio of the crosslinking molecule is [wt%/wt% of the total monomers] $\geq$0,01% and $\leq$3%, preferably $\geq$0,05% and $\leq$1,0%

Inorganic material

The inorganic material preferably comprises a salt of a metal selected out of lithium, copper, aluminum, iron, zinc, tin, divalent earthalkaline metals, preferably magnesium and calcium or mixtures thereof. The most preferred metal is calcium. Preferably the inorganic material consists mainly out of this salt.

Preferred anions comprise phosphate, carbonate, oxalate, silicate, sulfates, sulfites, sulfides or mixtures thereof. According to a preferred embodiment, the inorganic material comprises, more preferred consists mainly out of a phosphate and/or carbonate, most preferred phosphate.

According to a preferred embodiment of the present invention, the inorganic material comprises, more preferred consists mainly out of calcium phosphate.

The inorganic material forms percolated nanostructures within the hydrogel. The term "percolated nanostructures" especially means and/or includes structures that are overall interconnected through a material. One method to detect whether the inorganic material forms percolated nanostructures in water swollen hydrogels is via SEM of post-polymerized samples, for example according to Rauner, N., Buenger, L., Schuller, S. & Tiller, J. C. Post-polymerization of urease-induced calcified, polymer hydrogels. Macromolecular rapid communications 36, 224-230, 2014.

This method is especially suited for primary structures between 2 and 100 nm. Another way of detecting percolated structures in swollen hydrogels is to measure a sudden change of the materials Young's modulus during drying.

The present invention furthermore relates to a method of producing a hydrogel composite material, especially a hydrogel composite material as described above, comprising the steps of

> a) providing at least one polymerizable monomer and a catalyst capable of releasing an inorganic anion from a suitable precursor material
> b) polymerizing the at least one monomer so that a cross-linked hydrogel is formed, said cross-linked hydrogel at least partly embedding the catalyst
> c) providing one or more suitable precursor materials so that upon reaction with the catalyst an inorganic salt is formed
> d) allowing the catalyst to react with at least one of the precursor materials so that the inorganic salt forms percolated nanostructures within the hydrogel

Surprisingly it has been found that by doing so a hydrogel composite material can be made, showing an increased stiffness for many applications within the present invention.

For many applications within the present invention, one or more of the following advantages can be found

- The resulting hydrogel composite material is biocompatible and can be used for medicinal purposes, such as (but not excluding) stiff scaffolds in tissue engineering for regenerative medicine and cell growth, tough implants or carriers for drug delivery
- The hydrogel composite material can be used as membranes for processes that need high pressure, e.g. for water processing, nano filtration and water desalination.
- The hydrogel composite material is suited as fuel cell or battery separators and further can be used as material for electrodes.

The steps of the procedure will be described in more detail, whereby preferred features of all steps can be combined *ad libitum.* Furthermore all details of the hydrogel material as described above can be applied to the procedure *at libitum.*

Step a)

According to a preferred embodiment of the present invention, the at least monomer comprises a non-crosslinking monomer and a crosslinking molecule as described above.

According to a preferred embodiment of the present invention the ratio of the crosslinking molecule is [wt%/wt% of the total monomers and crosslinking molecules] $\geq$0,01% and $\leq$3%, preferably $\geq$0,05% and $\leq$1,0%.

According to a preferred embodiment of the present invention, the at least one monomer comprises is selected from the group comprising (meth)acrylic acids, isocyanates, vinylic alcohol derivatives, N-vinylpyrrolidones, epoxides, 2-R-2-oxazolines, saccharides, amino acids, vinylethers, phosphazenes, esters or mixtures thereof.

Preferably the monomer comprises at least one (meth)acrylic monomer, more preferably the monomer consists mainly out of (meth)acrylic monomers.

According to step a) also a catalyst is provided, capable of releasing an inorganic anion from a suitable precursor material

The inorganic anion preferably comprises, more preferably consists mainly out of phosphate, carbonate, oxalate, silicate, sulfates, sulfites, sulfides or mixtures thereof.

According to a preferred embodiment the catalyst comprises, preferably consists mainly of an enzyme.

If the inorganic anion comprises phosphate then according to a preferred embodiment of the present invention the enzyme comprises a phosphatase, preferably alkaline phosphatase (AP). According to a preferred embodiment of the present invention, therefore, the inorganic salt comprises phosphate and the catalyst comprises a phosphatase.

If the inorganic anion comprises carbonate then according to a preferred embodiment of the present invention the enzyme comprises urease.

However, the catalyst is explicitly not limited to enzymes and may include also organic or inorganic catalysts, aptamers, catalytic antibodies and the like.

According to a preferred embodiment of the present invention, if the catalyst comprises or consists mainly of an enzyme then the concentration of the catalyst is $\geq$0,01% and $\leq$2%, preferably $\geq$0,1% and $\leq$1%. This has proven itself in practice

Step b)

According to step b) the polymer is formed. According to most embodiments of the present invention this will be occurring using well-known techniques such as UV-polymerization of the (meth)acrylic monomers with or without the help of a photoinitiator such as Irgacure 651 or other substances well known in the field.

Due to the cross-linking a three-dimensional hydrogel polymer is formed in which the catalyst is at least partly embedded.

Step c)

According to Step c) one or more suitable precursor materials are provided. The resulting inorganic material can be as described above.

If the anion which then forms the inorganic salt comprises phosphate then it is preferred that the precursor material comprises a phosphate ester, which is hydrolysed by the catalyst. Suitable phosphate esters are selected out of the group comprising glycerol phosphate or glucose phoshate.

The cation of the inorganic salt may be present as an additional material (e.g. a water soluble salt), however according to a preferred embodiment, if the precursor material reacting with the catalyst is an anionic material then the cation may be delivered as the counter ion.

Preferred precursor materials are calcium glycerol phosphate or calcium glucose phosphate.

Step c) is according to a preferred embodiment performed in impregnating the reaction product of step b) with a solution comprising the precursor material(s).

According to a preferred embodiment of the present invention, the concentration of the total precursor material(s) in the solution is $\geq$0,01wt% and $\leq$30wt%. This has proven itself in practice for many applications within the present invention.

If the catalyst comprises an enzyme it is preferred that the solution comprises a buffer.

Step d)

Step d) includes the reaction of the catalyst with the precursor material(s). According to a preferred embodiment, step d) is performed ≥0°C and ≤60°C, preferably at room temperature or between ≥20°C and ≤30°C, preferably around 25°C.

According to a preferred embodiment of the present invention, step d) is performed so that the resulting ratio (vol/vol) of the inorganic material to the hydrogel material is from ≥3 to ≤20 vol%. This has proven itself effective for many applications within the present invention. More preferred the ratio (vol/vol) of the inorganic material to the hydrogel material is from ≥10 to ≤16 vol%.

According to a preferred embodiment, if the catalyst comprises an enzyme then the reaction time in step d) is selected for several days, preferably between ≥1d and ≤10d. It has been shown that by performing step d) in such a slow but steady fashion for many applications within the present invention the percolated nanostructures of the inorganic material are formed in an increased and desired fashion.

According to a preferred embodiment if the catalyst comprises an enzyme then it is especially preferred that during step d) an adjuvant material is present which prevents leaking of the enzyme out of the hydrogel. Suitable materials which are insofar preferred adjuvants in the sense of the present invention comprise polymers with aldehyde functions, especially polyglutaraldehyde. A preferred concentration is ≥1 g/l and ≤20g/l, preferably ≥4 g/l and ≤15 g/l.

The aforementioned components, as well as the claimed components and the components to be used in accordance with the invention in the described embodiments, are not subject to any special exceptions with respect to their size, shape, material selection and technical concept such that the selection criteria known in the pertinent field can be applied without limitations.

Additional details, characteristics and advantages of the object of the invention are disclosed in the subclaims and the following description of the respective examples --which in an exemplary fashion--show preferred embodiments according to the invention. Such embodiments do not necessarily represent the full scope of the invention, however, and reference is made therefore to the claims and herein for interpreting the scope of the invention. It is to be understood that both the foregoing general description and the following detailed description are exemplary and explanatory only and are intended to provide further explanation of the present invention as claimed.

The invention is in the following described by the following examples which are non-limiting and for illustration purposes only.

Source and preparation of the source materials

N,N'-dimethyl acrylamide (DMA) with 99% purity was supplied by Sigma-Aldrich. Both monomers were distilled, stored at -25 °C under argon atmosphere and used within 2 weeks. acrylamide (AAm) and the cross-linking agent triethylene glycol dimethacrylate (TEG) with 95% purity were obtained from Sigma-Aldrich. The second cross-linking agent N,N'-methylenebis(acrylamide) (MBAm) was supplied by Merck. The ethyl 2-[4-(dihydroxyphosphoryl)-2-oxabutyl] acrylic acid (EDPOA) was provided by Ivoclar Vivadent GmbH. The photoinitiator Irgacure 651 was endowed by Ciba Specialty Chemicals and Irgacure 2959 was obtained by TCI Europe.

Alkaline phosphatase (AP) from calf intestine with a denoted activity of at least 36.8 U g$^{-1}$ was purchased from AppliChem and stored at -25 °C. The AP formulation contained 40 wt% of protein according to a standard Bradford assay.

Calcium 2-glycerol phosphate (CaGP) and calcium chloride were obtained from Sigma Aldrich and Alfa Aesar, respectively. Triethanol amine (TEA) and glutaraldehyde (50 wt% solution) were purchased by Merck. A 32 wt% HCl solution was provided by VWR. P-nitrophenol and p-nitrophenyl phosphate were obtained from Fluka and ABCR. Glucose-6-phosphate was supplied by AppliChem. All chemicals were of analytical grade or purer and used without further purification if not noted otherwise.

A 0.2 M TEA buffer solution was prepared, adjusted to pH 9.8 using 1 M HCl solution. The inorganic precursor solution was prepared by dissolving 11 g CaGP (0.05M) in the prepared buffer solution and filling up the volume to 11.

General preparation materials for DMA / TEG materials

In the following a general preparation for hydrogel composite material of DMA and TEG, optionally EDPOA as monomers with calcium phosphate as inorganic material is described:

A mixture of 99 mg DMA and 1 mg TEG was prepared in a vessel. Optionally an amount of up to 10 mg monomer was substituted by EDPOA. Accordingly 0.5 mg of the photo-initiator Irgacure 651 and 20 µl of the prepared AP solution were added to the mixture.

The monomer/initiator/enzyme mixture was poured onto an adhesive tape covered glass slide (1 x 3 inch$^2$) and

another slide with distance holders was placed on top. The following polymerization was carried out in a UV flash light chamber (Heraeus Kulzer, Type Heraflash, Germany) at $\lambda$ = 340 nm for 480 s (flip over every 120 s). Then, the glass slides were carefully separated and the formed polymer film (thickness 280 $\pm$ 30 $\mu$m) was stored until use at -25°C.

200 ml of inorganic precursor solution were poured into a closed Schott bottle containing one AP loaded conetwork (typical size of 15x15 mm). Mixture was incubated at room temperature for up to 7 days. After the calcification process, the film was taken out, thoroughly rinsed with pure water and stored in a pure water filled snap-on lid jar.

General preparation method for AAm/MBAm hydrogel materials

In the following a general preparation method for hydrogel composite material of acrylamide (AAm) and MBAm as monomers with calcium phosphate as inorganic material is described

Two solutions were prepared by dissolving AAm (500 g $l^{-1}$) and MBAm (10 g $l^{-1}$) each in pure water. 199.88 $\mu$l (99.94 wt% monomer) of the AAm- solution were mixed with 6 $\mu$l (0.06 wt% cross-linker) in a vessel. Then 1 mg of the water soluble photo-initiator Irgacure 2959 and 20 $\mu$l of the prepared AP solution were added to the mixture.

From then the method follows the general preparation method for DMA/TEG materials as above.

General method for measuring Young's moduli:

The Young's moduli of the composites were determined with a dynamic mechanical analyzer (DMA 2980, TA Instruments, Inc.) with a film tension clamp operating at RT in multifrequency-mode. In order to measure the Young's modulus of the composite in the plain X or Y direction under tensile or compression stress, the swollen samples were clamped between the fixed and the movable clamp. For determination of the Young's modulus in Z direction under compression the composite was placed between two flat metal discs linked to the fixed and the movable clamp. After that the amplitude was adjusted to about 0.2% elongation and the frequency aligned at 1 Hz. The applied preload force was adjusted to 0.1 N more than the dynamic force, which was necessary to generate sample oscillation.

Calculation of fracture energy:

Fracture energy was measured following Rivlin, R. S. & Thomas, A. G. Rupture of rubber. I. Characteristic energy for tearing. Journal of Polymer Science 10, 291-318 (1953) and Sun, J.-Y. et al. Highly stretchable and tough hydrogels. Nature 489, 133-136 (2012):

Minimal 3 notched and 3 unnotched samples per film (length: 8 mm, width: 8 mm, thickness: 0.3 - 0.8 mm) were clamped in the DMA and their stress-strain-curves were measured with a force ramp of 0.5 N min$^{-1}$. The notched samples were prepared by cutting a notch with a length of 50% of the sample width by using a razor blade. These samples were used to determine the strain, which is necessary to turn the notch into a running crack. The corresponding fracture energy ($\Gamma$) in J m$^{-2}$ of the unnotched samples was calculated by using the following equation:

$$\Gamma = l_c \cdot \int_0^{\varepsilon_c} \sigma(\varepsilon)\, d\varepsilon$$

$\sigma$     stress [MPa]

$\varepsilon$     strain [%]

$\varepsilon_c$     strain to fracture of notched samples [%]

$l_c$     initial clamps distance [mm]

Table 1 shows the Young's moduli (in MPa) for several hydrogel composite materials based on DMA/TEG made by the above general preparation method. One can see that an increase of inorganic content also results in a higher Young's modulus, however, also already 5% inorganic content give a relatively high Youngs Modulus of 56MPa.

Table 1 - Young's modulus (in MPa) and inorganic volume fraction of calcium phosphate DMA/TEG composite hydrogels.

| Example No. | Calcification time [d] | EDPOA content [%wt] | Young's modulus [MPa] | inorganic content [vol %] |
|---|---|---|---|---|
| 1 | 4 | 0 | 258 | 13 |

(continued)

| Example No. | Calcification time [d] | EDPOA content [%wt] | Young's modulus [MPa] | inorganic content [vol %] |
|---|---|---|---|---|
| 2 | 3 | 1 | 308 | 14 |
| 3 | 3 | 2 | 333 | 16 |
| 4 | 3 | 5 | 403 | 13 |
| 5 | 4 | 7 | 369 | 12 |
| 6 | 7 | 10 | 56 | 5 |

Table 2 shows fracture energies (J m$^{-2}$) and Young's moduli (in MPa) for hydrogel materials based on AAm/MBAm and made by the above general preparation method:

Table 2 - fracture energies (J m$^{-2}$), Young's modulus (in MPa) and inorganic volume fraction of calcium phosphate AAm/MBAm composite hydrogels

| Example No. | Calcification time [d] | fracture energy [J m$^{-2}$] | Young's modulus [MPa] | inorganic content [vol%] |
|---|---|---|---|---|
| 7 | 1 | 317 | 0.1 | 5 |
| 8 | 2 | 556 | 0.4 | 8 |
| 9 | 3 | 1226 | 6 | 11 |
| 10 | 4 | 1246 | 103 | 12 |
| 11 | 7 | 762 | 154 | 15 |

The hydrogel composite materials of the examples were investigated by SEM to see whether the calcium phosphate forms percolated nanostructures. It could be seen that in both cases percolated nanostructures are formed. In the case of N,N-dimethyl acrylamide based materials spherical aggregates of nanostructures were found, while acrylamide based hydrogels result in a nanosized inorganic network filled with spherical holes of some 400 nm in diameter.

The particular combinations of elements and features in the above detailed embodiments are exemplary only; the interchanging and substitution of these teachings with other teachings in this and the patents/applications incorporated by reference are also expressly contemplated. As those skilled in the art will recognize, variations, modifications, and other implementations of what is described herein can occur to those of ordinary skill in the art without departing from the spirit and the scope of the invention as claimed. Accordingly, the foregoing description is by way of example only and is not intended as limiting. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. The invention's scope is defined in the following claims and the equivalents thereto. Furthermore, reference signs used in the description and claims do not limit the scope of the invention as claimed.

## Claims

1. Hydrogel composite material comprising a hydrogel material and an inorganic material, whereby the inorganic material forms percolated nanostructures within the hydrogel material.

2. Hydrogel composite material according to Claim 1, whereby the ratio (vol/vol) of the inorganic material to the hydrogel material is from ≥3 to ≤20 vol%.

3. Hydrogel composite material according to claim 1 or 2, whereby the hydrogel material comprises a superabsorbent material.

4. Hydrogel composite material according to any of the Claims 1 to 3 whereby the hydrogel material comprises a polymer selected from (meth)acrylic polymers, polyurethanes, polyvinyl alcohols, polyvinylpyrrolidones, polyepoxides, polyoxazolines, polysaccharides, proteins, polyvinylethers, polyphosphazenes, polyesters or mixtures thereof.

5. Hydrogel composite material according to any of the claims 1 to 4, whereby the hydrogel material consists mainly out of a cross-linked (meth)acrylic polymer.

6. Hydrogel composite material according to any of the claims 1 to 5, whereby the inorganic material comprises a salt of a metal selected out of lithium, copper, iron, zinc, tin, divalent earthalkaline metals, magnesium and calcium or mixtures thereof.

7. Hydrogel composite material according to any of the claims 1 to 6, whereby the inorganic material comprises a phosphate or carbonate.

8. A method of producing a hydrogel composite material, comprising the steps of

a) providing at least one polymerizable monomer and a catalyst capable of releasing an inorganic anion from a suitable percursor material
b) polymerizing the at least one monomer so that a cross-linked hydrogel is formed, said cross-linked hydrogel at least partly embedding the catalyst
c) providing one or more suitable precursor materials so that upon reaction with the catalyst an inorganic salt is formed
d) allowing the catalyst to react with at least one of the precursor materials so that the inorganic salt forms percolated nanostructures within the hydrogel

9. The method of claim 8, whereby the catalyst comprises an enzyme.

10. The method of claim 8 or 9, whereby the at least one polymerizable monomer comprises a (meth)acrylate monomer.

11. The method of any of the claims 8 to 10, whereby the inorganic salt comprises phosphate and the catalyst comprises a phosphatase.

12. The method of any of the claims 8 to 11 whereby the at least one precursor material comprises a phosphate ester.

13. The method of any of the claims 8 to 12 whereby the at least one precursor material comprises calcium glycerol phosphate and/or calcium glucose phosphate.

14. The method of any of the claims 8 to 13, whereby step d) is performed so that the resulting ratio (vol/vol) of the inorganic material to the hydrogel material is from $\geq 3$ to $\leq 20$ vol%.

15. The method of any of the claims 8 to 14, whereby the catalyst comprises an enzyme and the reaction time in step d) is selected between $\geq 1d$ and $\leq 10d$.

Europäisches
Patentamt

European
Patent Office

Office européen
des brevets

# EUROPEAN SEARCH REPORT

Application Number

EP 16 20 1806

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NICOLAS RAUNER ET AL: "Urease-induced calcification of segmented polymer hydrogels - A step towards artificial biomineralization", ACTA BIOMATERIALIA, vol. 10, no. 9, 2 June 2014 (2014-06-02), pages 3942-3951, XP055376974, AMSTERDAM, NL ISSN: 1742-7061, DOI: 10.1016/j.actbio.2014.05.021 * abstract * * 2. Experimental, 3. Results and discussion; page 3943 - page 3950; figures 2-5 * | 1-10,14, 15 | INV. C08J3/075 C08K5/00 C08K3/32 |
| X | TEL DOUGLAS ET AL: "Enzymatic mineralization of gellan gum hydrogel for bone tissue-engineering applications and its enhancement by polydopamine : Enzymatic mineralization of gellan gum enhanced by polydopamine functionalization", JOURNAL OF TISSUE ENGINEERING AND REGENERATIVE MEDICINE, vol. 8, no. 11, 5 October 2012 (2012-10-05), pages 906-918, XP055377478, US ISSN: 1932-6254, DOI: 10.1002/term.1616 * abstract * * 2. Materials and methods; page 908 - page 909; figure 3 * * 4. Discussion; page 915 - page 916; figures 5, 6 * | 1-4,6-9, 11-15 | TECHNICAL FIELDS SEARCHED (IPC) C08J C08K |

-/--

The present search report has been drawn up for all claims

| Place of search | Date of completion of the search | Examiner |
|---|---|---|
| Munich | 31 May 2017 | Meiser, Wibke |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

## EUROPEAN SEARCH REPORT

Application Number

EP 16 20 1806

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JEONG-YUN SUN ET AL: "Highly stretchable and tough hydrogels", NATURE, vol. 489, no. 7414, 5 September 2012 (2012-09-05), pages 133-136, XP055377727, United Kingdom ISSN: 0028-0836, DOI: 10.1038/nature11409 * column 2; figure 1 * | 1-15 | |
| T | NICOLAS RAUNER ET AL: "Enzymatic mineralization generates ultrastiff and tough hydrogels with tunable mechanics", NATURE, vol. 543, no. 7645, 1 March 2017 (2017-03-01), pages 407-410, XP055376970, United Kingdom ISSN: 0028-0836, DOI: 10.1038/nature21392 * the whole document * | | |

TECHNICAL FIELDS
SEARCHED (IPC)

The present search report has been drawn up for all claims

| Place of search | Date of completion of the search | Examiner |
|---|---|---|
| Munich | 31 May 2017 | Meiser, Wibke |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAUNER, N. ; BUENGER, L. ; SCHULLER, S. ; TILLER, J. C.** Post-polymerization of urease-induced calcified, polymer hydrogels. *Macromolecular rapid communications,* 2014, vol. 36, 224-230

- **RIVLIN, R. S. ; THOMAS, A. G.** Rupture of rubber. I. Characteristic energy for tearing. *Journal of Polymer Science,* 1953, vol. 10, 291-318
- **SUN, J.-Y. et al.** Highly stretchable and tough hydrogels. *Nature,* 2012, vol. 489, 133-136